**Europäisches Patentamt**

(19) **European Patent Office**

**Office européen des brevets**

(11) Publication number : **0 413 539 B1**

(12) **EUROPEAN PATENT SPECIFICATION**

(45) Date of publication of patent specification :
16.03.94 Bulletin 94/11

(51) Int. Cl.[5] : **A23G 3/30,** A23L 1/22, A23G 7/00

(21) Application number : **90308885.4**

(22) Date of filing : **13.08.90**

(54) **Flavour delivery system and its preparation.**

(30) Priority : **14.08.89 US 393442**

(43) Date of publication of application :
**20.02.91 Bulletin 91/08**

(45) Publication of the grant of the patent :
**16.03.94 Bulletin 94/11**

(84) Designated Contracting States :
**BE CH DE DK ES FR GB GR IT LI NL SE**

(56) References cited :
**EP-A- 0 067 595**
**EP-A- 0 176 236**
**EP-A- 0 176 280**
**EP-A- 0 273 009**
**US-A- 3 949 096**
**US-A- 4 087 557**
**US-A- 4 157 401**
**US-A- 4 597 970**
**DATABASE WPI/DERWENT accession no.**
**80-21191C (12), 1980, Derwent Publications**
**Ltd., London, GB; & JP - A - 55019014 (LOTTE**
**K.K.) 09.02.1980**

(56) References cited :
**DATABASE WPIL/DERWENT accession no.**
**87-218129 (31), 1987, Derwent Publications**
**Ltd., London, GB; & JP - A - 62144662 (LION**
**CORP.) 27.06.1987**
**DATABASE WPIL/DERWENT accession no.**
**85-225797 (37), 1985, Derwent Publications**
**Ltd., London, GB; & JP - A - 60145146 (YASUH-**
**ARA YUSHI KOGY) 31.07.1985**

(73) Proprietor : **WARNER-LAMBERT COMPANY**
**201 Tabor Road**
**Morris Plains New Jersey 07950 (US)**

(72) Inventor : **Raman, Krishna**
**5 Marre Drive**
**Randolph, New Jersey 07869 (US)**
Inventor : **Cherukuri, Subraman Rao**
**10 Jean Drive**
**Towaco, New Jersey 07082 (US)**
Inventor : **Mansukhani, Gul**
**97 Petrus Avenue**
**Staten Island, New York 10312 (US)**
Inventor : **Faust, Steven Michael**
**4-51 Audubon Court**
**Stanhope, New Jersey 07874 (US)**

(74) Representative : **Jones, Michael Raymond et al**
**HASELTINE LAKE & CO. Hazlitt House 28**
**Southampton Buildings Chancery Lane**
**London WC2A 1AT (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a new delivery system for flavors and sweeteners and to the process for its preparation, which has use in a variety of products including comestibles such as chewing gum compositions, confectioneries, pharmaceuticals, food products such as beverages and some baked goods, dentifrice compositions and denture adhesives and in packaging applications. More particularly, this invention relates to a process for preparing a flavor delivery system which provides enhancement of flavor with a controlled sustained release and intensity.

Flavor delivery systems are well known in the art which may be divided into various classes based upon their physical states, namely, liquids, emulsions, pastes or solids. Not only are these states different but the potential uses for each state also differ as do their method of manufacture.

Over the years considerable effort has been directed toward the preparation of flavoring materials. Specifically, flavor materials have been sought that provide greater flavor intensity coupled with sustained flavor release for long periods of time.

An outgrowth of this activity has been the observation that when free flavor oil is added to gum base, only about 5% to 40% of the initial flavor oil is released from the gum upon chewing. It appears that as much as 80% of the remaining flavor oil becomes irreversibly bound to the gum base and cannot be chewed out.

To overcome this difficulty with flavor oils in particular, various attempts have been made to encapsulate the flavor oils or use dried ingredients to inhibit the gum base binding action. In addition, considerable effort has been directed to the development of delayed release flavoring agents that will delay release of the flavoring agent while permitting uniform release of the flavor over an extended period of time. The obvious benefit of immediate/delayed release is the ability to provide uniform flavor sensation during the entire consumption period which has not been previously attainable by the direct incorporation of conventional seasonings and flavor oils into chewing gum formulations.

Spray drying is one of the most widely used techniques for encapsulating or fixing a flavor. In this procedure a flavor oil is usually blended with a film forming agent dispersed in water and then emulsified to form a stable emulsion. Emulsification is necessary because flavor oils are insoluble in the water needed to dissolve the film forming agent. Obtaining an emulsion of low viscosity, at high solids content, is critical to producing an acceptable product. Stability at higher temperatures is also critical to avoid volatilization of the flavor oil. Maintaining low inlet temperatures (i.e. around 155°C) as well as minimizing the residence time in the dryer are beneficial if the flavor is chemically unstable. The air drying conditions depend on the emulsion and product characteristics such as particle size of the product required. Modifications to the use of heat to remove the water from the emulsion have also been attempted. Some of these include the use of a dehydrating solvent as the drying medium rather than hot air. Freeze drying has also been contemplated.

Flavor fixation has also been obtained by the extrusion method wherein the flavor oil is coextruded with a water soluble sugar or sugar mixture, dried and ground for use. These products find application in dry mixes for instant release of the flavor on contact with water. Such products generally contain 10 to 15% by weight of flavor oil.

An extensive discussion of the prior art with respect to the extension of flavor is found in U.S. Patent No. 4,590,075 to Wei et al. The patentees discuss the preparation of encapsulated flavors which are added together with a quantity of a non-confined hydrophobic flavor oil to a suspension agent before formulation in a chewing gum (U.S. Patent No. 3,920,849 to Marmo et al.); the encapsulation of flavor in high molecular weight material such as polyvinyl acetate (U.S. Patent No. 3,826,847 to Ogawa et al.); the preparation of a flavor composite by crosslinking the flavor with a water-insoluble hydrophilic polymer such as hydroxyethyl acrylate (U.S. Patent No. 3,761,286); and the preparation of microencapsulated flavor particles and their dispersion in a slurry on the surface of a chewing gum (U.S. Patent No. 3,962,463). Further, U.S. Patent No. 4,695,463 to Yang et al. is noted and discloses a flavor delivery system that relies on the immobilization of the flavor within a crosslinked hydrocolloid multivalent alginate or carageenenate matrix.

Further, U.S. Patent No. 4,597,970 to Sharma et al. prepares a delivery system for actives such as sweeteners and including flavors which utilizes a hydrophobic matrix comprising edible fatty acids or waxes, lecithin and a glyceride component. This system is urged to provide a protective barrier and controlled release characteristics to the active so contained. The combination of materials in the encapsulating matrix provides wetting capabilities with respect to non-uniform core materials such as aspartame, while providing improved heat stability and thereby, extended high temperature processing capability. These attributes were frequently achieved at a cost of delay in release of the active.

U.S. Patent No. 3,867,556 to Darragh et al. also encapsulated volatile flavors in a fat or wax material. The patentees had found that the initial or base encapsulation displayed excessive instability to heat, and as their product was intended primarily for incorporation into baked goods, they applied a second coating of a water-soluble material such as gum arabic, which would provide high temperature stability while conferring rapid disintegration on contact with moisture. The Darragh et al. product likewise exhibited delayed flavor release.

Further, U.S. Patent No. 4,515,769 to Merritt et al. disclosed the encapsulation of flavor material in a partially hydrophilic matrix comprising gelatin, a natural gum or albumin or a plasticizer. This combined encapsulant was placed in an emulsion with the flavoring agent and thereafter dried to a solid matrix which was then ground to a base powder. The base powder was then coated with a water-insoluble material which purported to prevent flavor loss and delay flavor release in contact with moisture. Merritt et al. sought only to achieve a burst of flavor when the physical mastication of their flavor composite ruptured the outer encapsulating material.

U.S. Patent No. 4,087,557 to Bakal et al. relates to the incorporation of an artificial sweetener directly into the ester gum component of a chewing gum base, to achieve a delay and corresponding extension in sweetener release (column 2, lines 31-42). The patent contemplates the incorporation of certain flavors, specifically, food acids such as tartaric acid, succinic acid, etc. directly into the ester gum component, however, indicates that conventional flavors such as flavor oils are added separately after the gum base constituents including the artificial sweetener containing-ester gum have been mixed with each other and cooled. The flavor component is incorporated into chewing gums prepared in accordance with the patent in the conventional fashion, i.e., by direct incorporation of artificial flavor and/or by the incorporation of flavor coated with a hydrophilic material such as gum arabic (see Example 6). Bakal et al. accordingly offers no solutions to the problems of flavor delivery and extension of concern to the art.

Other approaches to the preparation of flavor composites, particularly with flavor oils, are noted. Thus, U.S. Patent No. 3,041,180 to Swisher discloses a process for extruding a flavor oil with glycerine and corn syrup solids to form an encapsulated extruded flavor oil. The solid was dried and yielded a particulate solid. U.S. Patent No. 4,610,890 to Miller et al. discloses another process for preparing an extruded flavor oil with sugar, a starch hydrolysate and an emulsifier.

U.S. Patent Nos. 4,448,789 and 4,569,852 to Yang discloses a novel flavoring agent -- hydrophilic polymer -- by blending the flavor with the polymer and blending while heating to prepare a homogenous product. Once coupled and ground, the product can be used as a flavoring for chewing gum and confectionery products.

U.S. Patent No. 4,271,202 to Giel relates to a spray-drying process for forming solid flavoring material capable of including high percentages of flavoring oil per total particulate unit of weight. Because of the high oil content possible, such spray-dried products found wide use in a number of beverages and other foods. However, it was also found that spray-dried flavors prepared by this and similar known methods typically exhibit a relatively limited shelf life. In addition, the high temperatures necessarily involved during spray-drying processes have been found to impair the flavor and aroma of various heat-sensitive oil flavors, such as those in citrus fruit. Furthermore, solids formed by spray-drying commonly exhibit hygroscopic characteristics making them difficult to handle and store.

In addition to these techniques, U.S. Patent No. 4,452,821 to Gergely is directed to a confectionery product, especially a chewing gum, that purports to offer prolonged, extended delivery of flavoring aroma and/or active pharmaceutical ingredient. This is accomplished by providing the flavoring, aroma or active pharmaceutical ingredient in a solid solution or mixture within a wax containing functional groups, said wax forming a homogeneous mixture of solid solution. The wax does not contain any functional groups and is substantially immiscible with the flavoring, aroma or active pharmaceutical ingredient.

The approaches to flavor modification discussed above all fall short of providing a flavor delivery system which achieves the advantages of flavor intensity and fullness inherent in flavor oils in combination with improved release and extension characteristics. In most instances, the gum base and, in particular, the elastomer component sequesters the flavor and thereby prevents its release during the chew. Moreover, the plasticizers and softeners conventionally employed in gum formulations tend to increase moisture pickup and corresponding flavor migration and loss, so that the flavor that might be available for release on chewing is further diminished in content and resulting extent of release and sensation.

## SUMMARY OF THE INVENTION

A flavor delivery system comprising a composite flavor having improved flavor retention, softening and flavor release characteristics and aroma masking when incorporated into chewing gums and other products, comprises a composite of a liquid flavor, preferably a flavor oil, a resin component selected from wood rosins, ester gums and mixtures, and a hydrophobic coating component selected from fats, waxes, and mixtures. The flavor component is preferably a flavor oil and is present in an amount by weight of the total composite of from about 5% to about 25%, the resin component is present in an amount from about 10% to about 20% by weight, and the hydrophobic component is present in an amount from about 45% to about 95% by weight.

More particularly, when the composite is prepared with a fat as the hydrophobic component, the flavor

EP 0 413 539 B1

component may be range in amount of from about 5% to about 20% by weight, the resin component may range in amount from about 10% to about 20% by weight, and the fat may be present in an amount from about 50% to about 85% by weight. When the hydrophobic component is prepared with a wax, the wax may be present in an amount of from about 45% to about 85% by weight, the flavor component is present in an amount from about 5% to about 25% by weight, and tha amount of the resin component would remain the same. In the instance where the hydrophobic component comprises a mixture of a fat and a wax, the proportions of each may vary outside the individual ranges recited above.

The fat or wax component of the hydrophobic coating component comprises fats, including fatty acids such as hydrogenated and partially hydrogenated oils; mono-, di- and triglycerides, polyglycerol esters and sorbitol esters, with castor oil, hydrogenated soybean oil and hydrogenated cottonseed oil particularly preferred. Waxes include natural and synthetic waxes, with representative waxes comprising polyolefin waxes, paraffin wax, beeswax, carnauba wax, microcrystalline wax, and mixtures, with microcrystalline wax and carnauba wax particularly preferred.

The present composite may be prepared by first heating the fat, wax or mixture thereof to its melting point and maintaining it at a temperature of about 85°C to about 90°C under agitation. An emulsifier may be added to the resulting melt, and in the instance where the delivery system is prepared to include a sweetener, the sweetener component is likewise added thereto. At the same time, the resin component is separately heated to its melting point whereupon the flavor component is added under agitation.

Before the flavor and resin are combined, an anti-caking agent such as a silica xerogel is added to the flavor and is mixed to form a slurry. The slurry is then added to the resin and the resulting composite is agitated until a first homogeneous mixture is formed. This solution is then added to the melted hydrophobic component and is agitated to form a second homogenous mixture which is thereafter spray congealed to form solid particles containing a flavor-resin core that is encased within an outer shell that may comprise the hydrophobic component, alone or in admixture with the resin component, and optionally also containing the sweetener.

One of the advantages of the flavor delivery system of the present invention flows from the protective effect that the resin component and the hydrophobic component exert on the flavor component. As a result of this protective effect the flavor is held by the resin, and for example, chewing gums formulated with the present flavor composite exhibit delayed-sustained flavor release.

Another feature of the present invention is that the resin component acts in conjunction with the hydrophobic coating component as both a carrier and binder to enrobe and shield the flavor and the optionally present sweetener, and masks flavor aroma for an extended time and even at the higher temperatures at which the present composite is prepared, and at which confections such as candies and chewing gum compositions receiving the present flavor delivery system are processed. An advantage, therefore, of this temperature stability is that loss of the actives both during product formulation and thereafter during product shipping and storage, of products employing the present flavor composite is substantially reduced.

The present composite finds utility in a variety of food and confectionery products as an additive thereto, and in a further embodiment as suggested above, may be formulated with a sweetener in an amount that may range up to about 20% by weight and preferably from about 12% to about 13% by weight thereof, to offer a combined sensation of flavor and sweetness. For example and as illustrated herein, the present composite was formulated with the sodium salt of saccharin and was found to provide an excellent presentation vehicle for the sweetener. The present delivery system provides the same protection to both actives and thereby stabilizes the longevity and intensity of both flavor and sweetness release that are experienced.

The present delivery system may, accordingly, be incorporated into a variety of confections including hard and soft candies, chewing gums and particularly, low calorie, low moisture formulations, as well as in pharmaceutical preparations, as a part of tablet coatings, and in such novel products as "scratch-and-sniff" and aroma packaging.

The flavor delivery system of the present invention may be used alone or in combination with conventional flavors, including liquid flavors, spray dried flavors and the like, as well as with optional sweeteners, in various edible products.

In a further embodiment, the present invention includes a chewing gum comprising a gum base, sweeteners, fillers, and other additives and the present delivery system. Both sugar containing and sugarless gums are contemplated, including gums with high gum base-low carbohydrate content.

Accordingly, it is a principal object of the present invention to provide a flavor delivery system that offers delayed flavor release characteristics.

It is a further object of the present invention to provide a flavor delivery system as aforesaid which provides improved flavor intensity and longevity, aroma masking, and extended high temperature and storage stability.

It is a still further object of the present invention to prepare a flavor delivery system having included therein an artificial sweetener for the improved delivery of both flavor and sweetness.

4

It is a still further object of the present invention to provide a chewing gum composition or other comestible product having contained therein the flavor delivery system of the present invention.

Other objects and advantages will become apparent to those skilled in the art from a consideration of the ensuing description which proceeds with reference to the following illustrative drawings.

BRIEF DESCRIPTION OF THE DRAWINGS

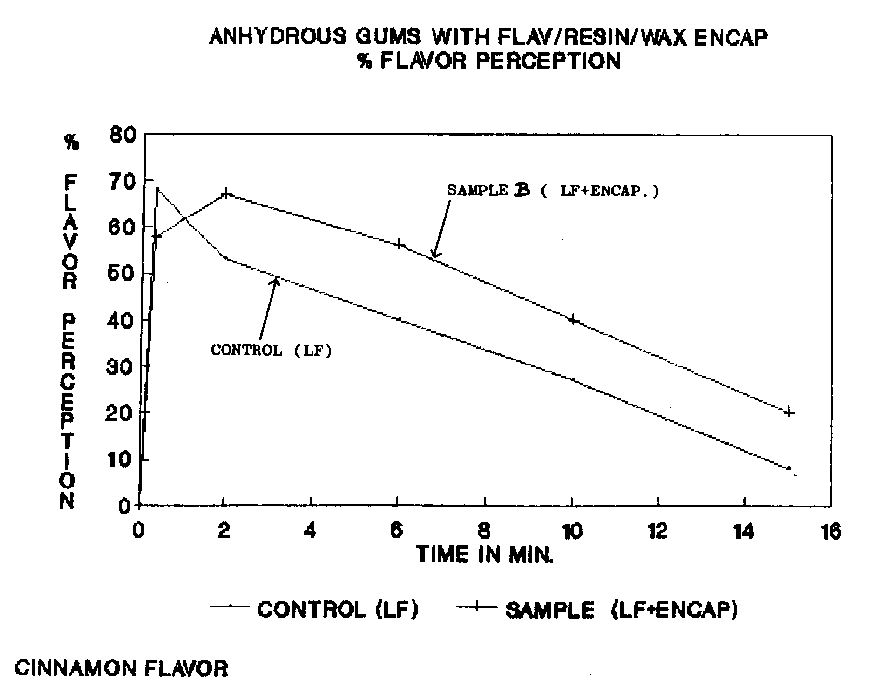

Figure 1 is a graph presenting the results of comparative sensory evaluation testing of an anhydrous cinnamon flavored chewing gum containing the inventive flavor delivery system prepared with cinnamon, and a control gum containing conventional liquid cinnamon flavor.

DETAILED DESCRIPTION

In accordance with the present invention, a flavor delivery system for flavors and optionally sweeteners, is disclosed which offers improved protection and release characteristics for both actives, in conjunction with flavor aroma masking properties, and high temperature and storage stability. The flavor delivery system accordingly comprises:

(a) a flavor component in an amount of from about 5% to about 25% by weight of the final delivery system;

(b) a resin component, said resin component comprising a rosin, in an amount of from about 10% to about 20% by weight of the final delivery system; and

(c) a hydrophobic coating component selected from fats, waxes and mixtures, in an amount from about 45% to about 95% by weight of the final delivery system.

More particularly, the delivery system of the present invention comprises the flavor component in an amount of from about 5% to about 20% by weight of the final delivery system, the resin component in an amount of from about 10% to about 20% by weight thereof, and the hydrophobic component in an amount of from about 50% to about 85% by weight thereof in the instance where the hydrophobic component is a fat. When the hydrophobic component is a wax, it is present in an amount of from about 45% to about 85%, the flavor component is present in an amount of from about 5% to about 25% by weight, and the resin is present in an amount of from about 10% to about 20% by weight. In the instance where the hydrophobic component comprises a mixture of a fat and a wax, the proportions of each may vary outside the individual ranges recited above.

Optionally, an emulsifier may be included, and in a preferred embodiment, the emulsifier may be present in an amount ranging up to about 5% by weight of the final delivery system. In the instance where emulsifiers are employed, suitable emulsifiers may include mono-, di and triglyceride esters of fatty acids, polyglycerol esters. More particularly, the emulsifier may be selected from the group consisting of lecithin, stearates, ester derivatives of stearates, palmitates, ester derivatives of palmitates, oleates, ester derivatives of oleates, glycerides, sucrose polyesters, polyglycerolesters and mixtures thereof. In a preferred embodiment, the emulsifier component may be present in an amount of from about 1% to about 5% by weight.

In accordance with a further embodiment, the present invention may be formulated with a sweetener in an amount that may range up to about 30% by weight and preferably from about 12% to about 13% by weight thereof, to offer a combined sensation of flavor and sweetness. The sweetener is added to the hydrophobic coating component during the formulation of the deliver system, as described later on herein. Suitable sweeteners include the synthetic intense sweeteners such as soluble saccharin salts; cyclamate salts; stevioside; glycyrrhizin, dipotassium glycyrrhizin, and glycyrrhizic acid ammonium salt; N-L-alpha-Aspartyl-L-phenylalanine 1-methyl ester (Aspartame); potassium salt of 6-methyl-1,2,3,-oxathiazin-4(3H)-one-2,2-dioxide (Acesulfame-K, a commercially available product of Hoechst Celanese Corporation, Somerville, New Jersey); 4,1',6',-Trichloro-4,1',6'-trideoxygalactosucrose (Sucralose, a commercially available product of McNeil Specialty Products Company, Skillman, New Jersey); L-alpha-Aspartyl-N-(2,2,4,4-tatramethyl-3-thietanyl)-D-alaninamide hydrate (Alitame, a commercially available product of Pfizer, New York, New York); and thaumatin (Talin).

The above sweeteners and similar intense sweeteners not listed above are chemically distinct and often present special problems when they are included in ingestible products. For example, certain sweeteners present stability problems, such as Aspartame which breaks down into potentially toxic byproducts in the presence of aldehydes, ketones, moisture. Similarly, other sweeteners exhibit a bitter aftertaste or off-note, such as Saccharin (a commercially available product of PMC Specialty Group Inc., Cincinnati, Ohio), Stevioside, Acesulfame-K, glycyrrhizin and its salts, and Talin. The incorporation of the aforenoted sweeteners into the present delivery system overcomes the prior drawbacks to their use, as the stability and taste-masking capability of the present deliver system provides the necessary protection for these intense sweeteners and improves and enhances their sweetness sensation in ingestible products.

For example and as illustrated herein, the present composite was formulated with the sodium salt of saccharin and was found to provide an excellent presentation vehicle for the sweetener. The present delivery system provides the same protection to both actives and thereby enhances the longevity and intensity of both flavor and sweetness release that are experienced.

Though not wishing to be bound to a particular theory of operation, it is believed that the present invention is predicated in part on the discovery that an interaction exists between flavors and particularly flavor oils and resins such as wood rosins and rosin esters, such that the resins protect and mask the flavor component. Accordingly, it is further theorized that an increase in the amount of resin in solution with a flavor such as a characteristically volatile flavor oil, shields the aroma of the flavor oil and decreases its potent odor.

Useful flavoring agents may be chosen from synthetic flavoring liquids such as synthetic flavor oils and flavoring aromatics and/or oils; and/or liquids, oleoresins or extracts derived from plants, leaves, flowers, fruits, etc., and combinations thereof. Preferably, the flavor component is selected from spearmint oil, cinnamon oil, oil of wintergreen (methylsalicylate) and peppermint oil, clove oil, bay oil, anise oil, eucalyptus oil, thyme oil, cedar leaf oil, oil of nutmeg, allspice, oil of sage, mace, oil of bitter almonds, and cassia oil. Also useful are artificial, natural or synthetic fruit flavors such as vanilla, and citrus oils including lemon, orange, grape, lime and grapefruit and fruit essences including apple, pear, peach, grape, strawberry, raspberry, cherry, plum, pineapple, apricot and so forth.

The term "resins" as used herein refers to resins such as wood rosins, rosin esters and ester gums. Suitable resins accordingly may be selected from pentaerythritol ester of partially hydrogenated wood rosin, pentaerythritol ester of wood rosin, glycerol ester of wood rosin, glycerol ester of partially dimerized rosin, glycerol ester of polymerized rosin, glycerol ester of tall oil rosin, glycerol ester of wood rosin and partially hydrogenated wood/gum rosin and partially hydrogenated methyl ester of rosin, such as polymers of alpha-pinene or beta-pinene; terpene resins including polyterpene and mixtures thereof.

The above indicated resin components useful in accordance with the present invention are selected because of their compatible temperature characteristics. Thus, the glycerol ester of partially hydrogenated wood or gum rosin, manufactured by Hercules Chemical and identified as Resin Ester #5, has a softening point ranging from about 79°-88°C. Similarly, the glycerol ester of tall oil rosin has a softening point of about 80°-88°C; the glycerol ester of wood rosin has a softening point of about 88°C-96°C; the deodorized glycerol ester of wood rosin has a softening point of about 88°-96°C; and the methyl ester of partially hydrogenated wood rosin is liquid at room temperature. Certain of the polyterpenes comprising the terpene hydrocarbon resins have softening points that vary with the type of resin and generally, however, range from about 100°-125°C. Similarly, the pentaerythritol ester of partially hydrogenated wood rosin has a softening point of from about 102°-110°C; the pentaerythritol ester of wood rosin has a softening point ranging from about 109°-116°C; the glycerol ester of polymerized rosin has a softening point ranging from about 80°-126°C; and the glycerol ester of partially dimerized rosin has a comparable softening point.

Before the flavor and resin are combined as described in greater detail herein, an anti-caking agent is added to the flavor and is mixed to form a slurry. Suitable anti-caking agents include silica containing materials such as precipitated silica or silica gels such as the silica xerogels described in Pader et als., U.S. Patent No. 3,538,230 issued March 2, 1970. Preferred are the silica xerogels marketed under the tradename "Syloid" by the W.R. Grace & Company, Davison Chemical Division. Other suitable materials include alumina, titanium dioxide. The anti-caking agent may be present in an amount of up to about 5% by weight of the final delivery system and preferably from about 1% to about 5%.

Materials suitable for the preparation of the hydrophobic coating component include the fats and/or waxes. Suitable fats include fatty acids such as hydrogenated or partially hydrogenated oils, with representative materials comprising palm oil, palm kernel oil, soybean oil, cottonseed oil, peanut oil, rapeseed oil, rice bran oil, sunflower oil, safflower oil, and mixtures thereof. Other materials also useful as fats herein may be selected from monoglycerides, diglycerides, triglycerides, polyglycerol esters, sorbitol esters, and mixtures thereof.

Suitable waxes include natural waxes, synthetic waxes, and mixtures thereof, and in particular, comprise materials selected from the group consisting of paraffin wax, beeswax, carnauba wax, candelilla wax, lanolin wax, bayberry wax, sugar cane wax, petrolatum, carbowax, spermaceti wax, rice bran wax, microcrystalline wax, and mixtures thereof.

In accordance with a further embodiment, the present invention includes a chewing gum composition offering improved flavor intensity and longevity, comprising a gum base, a sweetener and a flavor delivery system comprising:

(a) a flavor component in an amount of from about 5% to about 25% by weight of the final delivery system;
(b) a resin component, said resin component comprising a rosin, in an amount of from about 10% to about 20% by weight of the final delivery system; and
(c) a hydrophobic coating component selected from fats, waxes and mixtures, in an amount from about 45% to about 95% by weight of the final delivery system.

The present invention includes both sugar containing and sugarless chewing gums comprising a gum base, one or more sweeteners and the present delivery system. In the instance where the gum formulations are being prepared, a variety of softening agents may be utilized for their intended purposes. Such softening agents suitable for gum formulations include lecithin, glycerin, acetylated monoglyceride, triacetin, hydrogenated vegetable oils, mineral oils, polyglycerol esters of fatty acids, and mixtures thereof. These softening agents are utilized within conventional amounts for such ingredients.

The total amount of flavoring agent employed in a gum formulation is normally a matter of preference subject to such factors as flavor type, base type and strength desired. In general, amounts of about 0.5% to about 10.0% by weight of the final chewing gum composition are usable with amounts of about 0.5% to about 2.5% being preferred and about 0.7% to about 2.0% being most preferred.

With regard to chewing gum formulations in which the novel delivery system is employed, the amount of gum base employed will vary greatly depending on various factors such as the type of base used, consistency desired and other components used to make the final product. In general, amounts of about 5% to about 85% by weight of the final chewing gum composition are acceptable for use in chewing gum compositions with preferred amounts of about 15% to about 70% by weight. The gum base may be any water-insoluble gum base well known in the art. Illustrative examples of suitable polymers in gum bases include both natural and synthetic elastomers and rubbers. For example, those polymers which are suitable in gum bases include, without limitation, substances of vegetable origin such as chicle, jelutong, gutta percha and crown gum. Synthetic elastomers such as butadiene-styrene copolymers, isobutylene-isoprene copolymers, polyethylene, polyisobutylene and polyvinylacetate and mixtures thereof are particularly useful.

The gum base composition may contain elastomer solvents to aid in softening the rubber component. Such elastomer solvents may comprise methyl, glycerol or pentaerythritol esters of rosins or modified rosins, such as hydrogenated, dimerized or polymerized rosins or mixtures thereof. Examples of elastomer solvents suitable for use herein include the pentaerythritol ester of partially hydrogenated wood rosin, pentaerythritol ester of wood rosin, glycerol ester of wood rosin, glycerol ester of partially dimerized rosin, glycerol ester of polymerized rosin, glycerol ester of tall oil rosin, glycerol ester of wood rosin and partially hydrogenated wood rosin and partially hydrogenated methyl ester of rosin, such as polymers of alpha-pinene or beta-pinene; terpene resins including polyterpene and mixtures thereof. The solvent may be employed in an amount ranging from about 10% to about 75% and preferably about 45% to about 70% by weight to the gum base.

A variety of traditional ingredients such as plasticizers or softeners such as lanolin, stearic acid, sodium stearate, potassium stearate, glyceryl triacetate, glycerin and the like, for example, natural waxes, petroleum waxes, such as polyurethane waxes, paraffin waxes and microcrystalline waxes may also be incorporated into the gum base to obtain a variety of desirable textures and consistency properties. In accordance with the invention, however, these ingredients may be reduced in amount or in some cases, may be eliminated entirely. When present, these individual additional materials are generally employed in amounts of up to about 15% by weight and preferably in amounts of from about 3% to about 10% by weight of the final gum base composition.

The chewing gum composition may additionally include the conventional additives of coloring agents such as titanium dioxide; emulsifiers such as lecithin and glyceryl monostearate; additional fillers such as aluminum hydroxide, alumina, aluminum silicates, calcium carbonate, and talc and combinations thereof; and additional flavoring agents. These fillers may also be used in the gum base in various amounts. Preferably, the amount of fillers when used will vary from about 4% to about 35% by weight of the final chewing gum.

In the instance where sweeteners are utilized in addition to those that may be included in the delivery system, the present invention contemplates the inclusion of those sweeteners well known in the art, including both natural and artificial sweeteners. Thus, additional sweeteners may be chosen from the following non-limiting list: sugars such as sucrose, glucose (corn syrup), dextrose, invert sugar, fructose, polydextrose, cellulose, fibers, and mixtures thereof, saccharine and its various salts such as the sodium or calcium salt; cyclamic acid and its various salts such as the sodium salt; the dipeptide sweeteners such as aspartame; dihydrochalcone compounds, glycyrrhizin; Stevia Rebaudiana (Stevioside); chloro derivatives of sucrose; dihydroflavinol; hydroxyguaiacol esters; L-amino dicarboxylic acid gem-diamines; L-aminodicarboxylic acid aminoalkenoic acid ester amides; and sugar alcohols such as sorbitol, sorbitol syrup, mannitol, xylitol, and the like. Also contemplated as an additional sweetener is the nonfermentable sugar substitute (hydrogenated starch hydrolysate) which is described in U.S. Reissue Patent No. 26,959. Also contemplated is the synthetic sweetener 3,6-dihydro-6-methyl-1-1,2,3-oxathiazin-4-one-2,2-dioxide, particularly the potassium (acesulfame-K), sodium and calcium salts thereof as described in German Patent No. 2,001,017.7.

Suitable auxiliary flavorings including both natural and artificial flavors, and mints such as peppermint, menthol, artificial vanilla, cinnamon, various fruit flavors, both individual and mixed, and the like are contemplated. Such flavorings are generally utilized in amounts that will vary depending upon the amount of the flavor delivery system employed and may, for example, range in amounts of up to about 2% by weight of the final chewing gum composition weight. Thus the auxiliary flavorings may be present in the delivery system, in the chewing gum composition itself, or both.

The colorants useful in the present invention include the pigments such as titanium dioxide, that may be incorporated in amounts of up to about 1% by weight, and preferably up to about 6% by weight. Also, the colorants may include other dyes suitable for food, drug and cosmetic applications, and known as FD&C dyes and the like. The materials acceptable for the foregoing spectrum of use are preferably water-soluble. Illustrative examples include indigoid dye, known as FD&C Blue No. 2, which is the disodium salt of 5,5'-indigotindisulfonic acid. Similarly, the dye known as FD&C Green No. 1 comprises a triphenylmethane dye and is the monosodium salts of 4-[4-N-ethyl-p-sulfobenzylamino)diphenylmethylene]-[1-(N-ethyl-N-p-sulfoniumbenzyl)-2-5-cyclohexadieneimine]. A full recitation of all FD&C and D&C dyes and their corresponding chemical structures may be found in the Kirk-Othmer Encyclopedia of Chemical Technology, in Volume 5, pages 857-884.

The chewing gums to the invention may be in any form known in the art, such as stick gum, slab gum, chunk gum, shredded gum, hard-coated gum, tableted gum, as well as center-filled gum.

A representative process for preparing a chewing gum composition including the inventive flavor delivery system is as follows. The gum base is melted (about 85° to about 90°C), cooled to from 75° to 80°C and placed in a pre-warmed (60°C) standard mixing kettle equipped with sigma blades. Any additional emulsifier for the gum base is then added and mixed in. Next, a portion of the sorbitol and any glycerin is added and mixed in for an additional 3 to 6 minutes. The mixing kettle is cooled and mannitol, and the remainder of the sorbitol and glycerin are then added and mixing is continued. At the time, the unflavored chewing gum temperature is about 39° to about 50°C. The flavor delivery system is then added and incorporated into the base and mixing is continued. Finally, the sweetener material is added and mixed for an additional 1 to 10 minutes. The final gum temperature is about 39°C-50°C. The chewing gum composition is then discharged from the kettle, rolled, scored and formed into chewing gum pieces.

Accordingly, a further embodiment of the present invention relates to a method of preparing a chewing gum composition having improved sustained flavor intensity and release properties which comprises:

(1) Preparing a flavor delivery system by the process comprising:

(a) melting a resin component selected from rosins, rosin esters, and mixtures;

(b) adding a flavor component to the melted resin component under agitation, and stirring the resulting mixture with external heat withdrawn to form a first homogeneous mixture;

(c) melting a hydrophobic coating component selected from fats, waxes and mixtures;

(d) adding the mixture of Step (b) to the hydrophobic coating component under agitation and continuing to agitate until a second homogeneous mixture is formed; and

(e) forming particles of the composite of the flavor, resin and hydrophobic coating components, by spray congealing;

(f) wherein the flavor component, resin component and hydrophobic coating component are present in amounts by weight of the final delivery system of from 5% to 25% for the flavor component, from 10% to 20% for the resin component and from 45% to 95% for the hydrophobic coating;

(2) Adding the resultant flavor delivery system to a homogeneous mixture of a gum base and remaining chewing gum ingredients; and

(3) Forming the resultant mixture into suitable chewing gum shapes.

The present composite may be prepared by first heating the fat and/or wax component to its melting point and maintaining it at a temperature of about 85°C to about 90°C under agitation. An emulsifier may be added to the melted fat and/or wax, after which the resulting melted material is agitated until mixing is complete, and is maintained at a temperature of about 80° to about 85°C.

At the same time, the resin component is separately heated in a steam jacketed kettle to a temperature of about 85° to about 90°C, whereupon the steam is shut off and the flavor component is added under agitation. Before the flavor and resin are combined, an anti-caking agent such as a silica xerogel is added to the flavor and is mixed to form a slurry. The slurry is then added to the resin which is maintained at a temperature of about 80°C, and the resulting composite is agitated until a first homogeneous mixture is formed. This solution is then added to the liquid hydrophobic coating component which has been maintained at a temperature of about 80°C, and the resulting material is agitated to form a second homogenous mixture which is thereafter spray congealed to form solid particles containing a flavor-resin core that is encased within an outer shell that may comprise the hydrophobic coating component, alone or in admixture with the resin component.

In the instance where the present delivery system is prepared with a sweetener, the procedure is essentially the same as previously described. Accordingly, the fat and/or wax component is first heated to its melting point and then is maintained at a temperature of about 85°C to about 90°C under agitation. At this point the sweetener component is added to the melted fat and/or wax, and in the instance where it is desired to include an emulsifier, the emulsifier is likewise added thereto. Thereafter, the melted hydrophobic coating material is agitated until mixing is complete, and is maintained at a temperature of about 80° to about 85°C.

At the same time, the resin component is separately heated in a steam jacketed kettle to a temperature of about 85° to about 90°C, whereupon the steam is shut off and the flavor component is added under agitation. Before the flavor and resin are combined, the anti-caking agent is added to the flavor as noted above and is mixed to form a slurry. The slurry is then added to the resin which is maintained at a temperature of about 80°C, and the resulting composite is agitated until a first homogeneous mixture is formed. This solution is then added to the liquid hydrophobic coating component which has been maintained at a temperature of about 80°C, and the resulting material is agitated to form a second homogenous mixture which is thereafter spray congealed to form solid particles containing a flavor-resin core that is encased within an outer shell that may comprise the sweetener and the hydrophobic coating component, alone or in admixture with the resin component.

The process of spray congealing as used herein refers to feeding of the second homogeneous mixture through a heat controlled spray nozzle, and the formation of atomized liquid droplet within a closed, temperature regulated chamber, so that the droplets cool and solidify upon hitting the cooler temperature of tha surrounding atmosphere, which may, for example, be on the order of 25°C. The nozzle pressure is regulated to control particle droplet size, and droplets cool and congeal once they are emitted from the nozzle and contact the cooler environment. The result of this process is a dry particle or agglomerate which may have an approximate elliptical or spherical shape.

The resultant product of this invention is in powder or granulated form. The particle size is not critical to the delivery system and can be adjusted to accommodate a particular desired release rate and mouthfeel, depending on the vehicle, e.g., chewing gum, confection, pharmaceutical, oral preparation or dentifrice, in which it is incorporated.

As mentioned earlier, the present flavor delivery system including those instances where the sweetener is incorporated therein as described above, may be readily incorporated into a variety of products including comestible products such as chewing gums including both sugared and sugarless gums, pharmaceutical preparations including tablet coatings, dentifrices and dental compositions and industrial non-edible applications such as aroma packaging and "scratch-and-sniff" applications useful for advertising and novelty flavor and aroma delivery.

All percentages throughout the specification are by weight percent of the final delivery system unless otherwise indicated.

## EXAMPLE 1

In this example, representative formulations of the flavor delivery system of the present system were prepared. The specific components of the flavor delivery system comprised a cinnamon flavor oil and the glycerol ester of partially hydrogenated wood gum rosin (Resin Ester #5). The systems were prepared in accordance with the method described hereinabove in the individual proportions as set forth in Tables I-VI, below.

Specifically, Table I presents a series of delivery system formulations wherein the hydrophobic coating component is a fat, and in particular, a mixture of hydrogenated cottonseed oil, hydrogenated soybean oil and castor oil. In Table II, the delivery systems listed therein were prepared with a wax, in particular, carnauba wax and/or microcrystalline wax, while Table III lists delivery systems employing a hydrophobic coating component that is a combination of a fat and a wax. Lastly, Tables IV, V and VI depict formulations wherein a quantity of the sweetener sodium saccharin was added to the hydrophobic coating component. Table VI illustrates the addition of the sweetener to hydrophobic coating components that are combinations of a fat and a wax.

## TABLE I
### FLAVOR COMPOSITES PREPARED WITH
### FAT AS HYDROPHOBIC COMPONENT

| FORMULATION INGREDIENTS (WT. %) | BROAD RANGE | 1 | 2 | 3 | 4 | 5 | 6 | 7 | 8 | 9 | 10 | 11 |
|---|---|---|---|---|---|---|---|---|---|---|---|---|
| FAT | 50-84% | 84 | 79 | 79 | 74 | 74 | 69 | 69 | 64 | 53 | 65 | 50 |
| RESIN | 10-20% | 10 | 10 | 10 | 10 | 10 | 10 | 10 | 10 | 20 | 10 | 20 |
| LIQUID FLAVOR | 5-20% | 5 | 5 | 10 | 10 | 15 | 15 | 20 | 20 | 20 | 15 | 20 |
| EMULSIFIER | 0- 5% | 0 | 5 | 0 | 5 | 0 | 5 | 0 | 5 | 5 | 5 | 5 |
| ANTICAKING AGENT | 1- 5% | 1 | 1 | 1 | 1 | 1 | 1 | 1 | 1 | 2 | 5 | 5 |

## TABLE II
### FLAVOR COMPOSITES PREPARED WITH
### WAX AS HYDROPHOBIC COMPONENT

| FORMULATION INGREDIENTS (WT. %) | BROAD RANGE | 12 | 13 | 14 | 15 | 16 | 17 | 18 | 19 | 20 | 21 | 22 | 23 |
|---|---|---|---|---|---|---|---|---|---|---|---|---|---|
| WAX | 45-85% | 85 | 69 | 80 | 64 | 74 | 69 | 70 | 54 | 65 | 49 | 60 | 45 |
| RESIN | 10-20% | 10 | 20 | 10 | 20 | 10 | 10 | 10 | 20 | 10 | 20 | 10 | 20 |
| LIQUID FLAVOR | 5-25% | 5 | 5 | 10 | 10 | 15 | 15 | 20 | 20 | 25 | 25 | 20 | 25 |
| EMULSIFIER | 0- 5% | 0 | 5 | 0 | 5 | 0 | 5 | 0 | 5 | 0 | 5 | 5 | 5 |
| ANTICAKING AGENT | 0- 5% | 0 | 1 | 0 | 1 | 1 | 1 | 0 | 1 | 0 | 1 | 5 | 5 |

EP 0 413 539 B1

EP 0 413 539 B1

## TABLE III
### FLAVOR COMPOSITES PREPARED WITH WAX AND FAT
### MIXTURE – HYDROPHOBIC COMPONENT

| FORMULATION INGREDIENTS (WT. %) | BROAD RANGE | 24 | 25 | 26 | 27 |
|---|---|---|---|---|---|
| WAX | 5-25% | 11.0 | 17.0 | 23.0 | 6.0 |
| FAT | 30-75% | 63.0 | 52.0 | 30.0 | 73.0 |
| RESIN | 10-20% | 10.0 | 10.0 | 20.0 | 10.0 |
| LIQUID FLAVOR | 5-20% | 10.0 | 15.0 | 20.0 | 10.0 |
| EMULSIFIER | 0- 5% | 5.0 | 5.0 | 5.0 | 0 |
| ANTICAKING AGENT | 1- 5% | 1.0 | 1.0 | 2.0 | 1.0 |

EP 0 413 539 B1

## TABLE IV
## FLAVOR COMPOSITES PREPARED WITH FAT AND
## SWEETENER ADDED - HYDROPHOBIC COMPONENT

| FORMULATION INGREDIENTS (WT. %) | BROAD RANGE | 28 | 29 | 30 | 31 | 32 | 33 | 34 | 35 |
|---|---|---|---|---|---|---|---|---|---|
| SWEETENER | 1-30% | 5 | 5 | 5 | 10 | 15 | 12.67 | 10 | 10 |
| LIQUID FLAVOR | 5-20% | 10 | 15 | 20 | 10 | 20 | 15.00 | 10 | 10 |
| FAT | 34-85% | 69 | 54 | 54 | 64 | 44 | 56.33 | 55 | 59 |
| RESIN | 10-20% | 10 | 20 | 15 | 10 | 15 | 10.00 | 20 | 15 |
| EMULSIFIER | 0- 5% | 5 | 5 | 5 | 5 | 5 | 5.00 | 0 | 5 |
| ANTICAKING AGENT | 1- 5% | 1 | 1 | 1 | 1 | 1 | 1.00 | 5 | 1 |

## TABLE V

### FLAVOR COMPOSITES PREPARED WITH WAX AND
### SWEETENER ADDED – HYDROPHOBIC COMPONENT

| FORMULATION INGREDIENTS (WT. %) | BROAD RANGE | 36 | 37 | 38 | 39 | 40 | 41 | 42 | 43 |
|---|---|---|---|---|---|---|---|---|---|
| SWEETENER | 1-30% | 5 | 5 | 5 | 10 | 15 | 12.67 | 10 | 10 |
| LIQUID FLAVOR | 5-20% | 10 | 15 | 20 | 10 | 20 | 15.00 | 10 | 10 |
| WAX ( | 29-85% | 59 | 59 | 59 | 59 | 49 | 56.33 | 65 | 54 |
| RESIN | 10-20% | 20 | 15 | 10 | 20 | 10 | 10.00 | 10 | 20 |
| EMULSIFIER | 0- 5% | 5 | 5 | 5 | 0 | 5 | 5.00 | 0 | 5 |
| ANTICAKING AGENT | 1- 5% | 1 | 1 | 1 | 1 | 1 | 1.00 | 5 | 1 |

EP 0 413 539 B1

## TABLE VI
### FLAVOR COMPOSITES PREPARED WITH WAX AND FAT MIXTURE
### SWEETENER ADDED - HYDROPHOBIC COMPONENT

| FORMULATION INGREDIENTS (WT. %) | BROAD RANGE | 44 | 45 | 46 | 47 |
|---|---|---|---|---|---|
| SWEETENER | 1-30% | 5 | 5 | 10 | 10 |
| LIQUID FLAVOR | 5-20% | 10 | 15 | 20 | 15 |
| WAX | 5-30% | 10 | 11 | 22 | 12 |
| FAT | 30-65% | 59 | 48 | 37 | 42 |
| RESIN | 10-20% | 10 | 15 | 10 | 15 |
| EMULSIFIER | 0-30% | 5 | 5 | 0 | 5 |
| ANTICAKING AGENT | 1- 5% | 1 | 1 | 1 | 1 |

All of the above formulations yielded delivery sytems for the actives that enhanced flavor presentation, longevity and protection, while providing desired presentation of the sweetener when present. Of these, Formulations 6, 17, 33 and 41 were preferred.

EXAMPLE II

Flavor composites representing the present invention were prepared with cinnamon flavor and incorporated into an anhydrous gum composition for comparative testing and sensory evaluation. Accordingly, three gum samples were prepared with cinnamon flavor and were combined with an anhydrous gum base as set forth in Table VII, below. Control gum with liquid cinnamon flavor was also prepared.

14

## TABLE VII

### ANHYDROUS CHEWING GUM COMPOSITIONS

| INGREDIENTS (WT. %) | Control | A | B | C |
|---|---|---|---|---|
| Gum Base | 23.0 | 23.0 | 23.0 | 23.0 |
| Carbohydrates | 58.4546 | 57.888 | 57.3213 | 56.7546 |
| Softener | 15.50 | 15.50 | 15.50 | 15.50 |
| Liquid Flavor | 1.8461 | 1.7461 | 1.6461 | 1.5461 |
| Encapsulated Flavor | - | 0.6666 (0.1 liquid flavor) | 1.3333 (0.2 liquid flavor) | 2.000 (0.3 liquid flavor) |
| Color | 0.1173 | 0.1173 | 0.1173 | 0.1173 |
| Sweetener Free, Encapsulated Core & Coating (1440 ppm) | 1.082 | 1.082 | 1.082 | 1.082 |

The above compositions were prepared in conventional fashion into stick form, and the control and Sample B were then subjected to chew testing for sensory evaluation. The results of the sensory evaluation are set forth in Figure 1.

Referring to Figure 1, the gum sample labeled B offered improved flavor perception and release over the control that lasted over 15 minutes. The inventive gum composition delivered more flavor up to 15 minutes and offered improved flavor uniformity and intensity throughout this period.

## Claims

**Claims for the following Contracting States : BE, DK, FR, DE, GR, IT, NL, SE, CH, GB**

1. A flavour delivery system offering improved uniformity of flavour release, temperature stability, and taste and aroma masking, and comprising:
   (a) a flavour component in an amount of from 5% to 25% by weight of the final delivery system;
   (b) a resin component, which resin component comprises a rosin, in an amount of from 10% to 20% by weight of the final delivery system; and
   (c) a hydrophobic coating component selected from fats, waxes and mixtures, in an amount of from 45% to 85% by weight of the final delivery system.

2. A flavour delivery system according to claim 1, wherein the flavour component comprises a flavour oil, preferably spearmint oil, cinnamon oil, oil of wintergreen (methylsalicylate), peppermint oil, lemon oil, orange oil, grape oil, lime oil, grapefruit oil, apple essence, strawberry essence, cherry essence, pineapple essence, banana oil or a mixture thereof.

3. A flavour deliver system according to claim 1 or 2, wherein the flavour component is present in an amount of from 5% to 20% by weight, the resin is present in an amount of from 10% to 20% by weight, and the hydrophobic coating component comprises a fat and is present in an amount of from 50% to 85% by weight, all weights being with respect to the final delivery system.

4. A flavour delivery system according to claim 1 or 2, wherein the flavour component is present in an amount of from 5% to 25% by weight, the resin is present in an amount of from 10% to 20% by weight, and the hydrophobic coating component comprises a wax and is present in an amount of from 45% to 85% by weight, all weights being with respect to the final delivery system.

5.  A flavour delivery system according to claim 1, 2, 3 or 4, wherein the resin component is selected from rosins, rosin esters, and mixtures thereof, preferably:- pentaerythritol ester of partially hydrogenated wood rosin; pentaerythritol ester of wood rosin; glycerol ester of wood rosin; glycerol ester of partially dimerized rosin; glycerol ester of polymerized rosin; glycerol ester of tall oil rosin; glycerol ester of wood rosin and partially hydrogenated wood rosin and partially hydrogenated methyl ester of rosin, such as polymers of alpha-pinene or beta-pinene; terpene resins including polyterpene; or a mixture thereof.

6.  A flavour delivery system according to any preceding claim, including an emulsifier.

7.  A flavour delivery system according to claim 6, wherein the emulsifier is present in an amount of up to 5% by weight of the final delivery system, preferably in an amount of from 1% to 5% by weight of the final delivery system.

8.  A flavour delivery system according to claim 6 or 7, wherein the emulsifier is selected from monoglycerides, diglycerides and triglycerides of fatty acids, polyglycerol esters, and mixtures thereof.

9.  A flavour delivery system according to claim 6 or 7, wherein the emulsifier is selected from lecithin, stearates, ester derivatives of stearates, palmitates, ester derivatives of palmitates, oleates, ester derivatives of oleates, glycerides, sucrose polyesters, polyglycerol esters and mixtures thereof.

10. A flavour delivery system according to any preceding claim, further including up to 30% by weight of a sweetener.

11. A flavour delivery system according to claim 10, wherein the sweetener is a natural or artificial high intensity sweetener selected from amino acid-based sweeteners, dipeptide sweeteners, glycyrrhizin, saccharin and its salts, acesulfame salts, cyclamates, steviosides, talin, sucralose, dihydrochalcone compounds and mixtures thereof; preferably sodium saccharin, talin, and acesulfame-K.

12. A flavour delivery system according to any preceding claim, which is in solid particulate form.

13. A chewing gum composition offering improved flavour intensity and longevity, comprising a gum base, a sweetener and a flavour delivery system, the flavour delivery system comprising:
    (a) a flavour component in an amount of from 5% to 25% by weight of the final delivery system;
    (b) a resin component, which resin component comprises a rosin, in an amount of from 10% to 20% by weight of the final delivery system; and
    (c) a hydrophobic coating component selected from fats, waxes and mixtures, in an amount from 45% to 85% by weight of the final delivery system.

14. A chewing gum composition according to claim 13, wherein the gum base comprises an elastomer selected from natural rubber, synthetic rubber and mixtures thereof, preferably chicle, jelutong, balata, guttapercha, lechi-capsi, sorva, butadiene-styrene copolymers, polyisobutylene, isobutylene-isoprene copolymers, polyethylene, polyvinylacetate, and mixtures thereof.

15. A chewing gum composition according to claim 13 or 14, wherein the gum base is present in an amount of from 5% to 85% by weight of the final chewing gum composition.

16. A chewing gum composition according to claim 13, 14 or 15, which also includes one or more of fillers, colouring agents, flavouring agents, softeners, plasticizers, elastomers, elastomer solvents, sweetening agents and mixtures thereof.

17. A process for preparing a flavour delivery system, comprising
    (a) melting a resin component selected from rosins, rosin esters, and mixtures;
    (b) adding flavour component to the melted resin component under agitation, and stirring the resulting mixture with external heat withdrawn to form a first homogeneous mixture;
    (c) melting a hydrophobic coating component selected from fats, waxes and mixtures thereof;
    (d) adding the mixture of Step (b) to the molten hydrophobic coating component under agitation and continuing to agitate until a second homogeneous mixture is formed; and

(e) forming particles of the composite of the flavour component, resin component and hydrophobic coating component, by spray congealing;

wherein the flavour component, resin component and hydrophobic coating component are present in amounts by weight of the final delivery system of from 5% to 25% for the flavour component, from 10% to 20% for the resin component and from 45% to 85% for the hydrophobic coating component.

18. A process for preparing a chewing gum composition having improved sustained flavour intensity and release properties, which comprises:

(1) preparing a flavour delivery system by the process of claim 17;

(2) adding the flavour delivery system prepared in Step 1 to a homogeneous mixture of a gum base and remaining chewing gum ingredients; and

(3) forming the resultant mixture into suitable chewing gum shapes.

19. A confectionery composition in which is incorporated a flavour delivery system according to any one of claims 1 to 12.

20. A pharmaceutical composition in which is incorporated a flavour delivery system according to any one of claims 1 to 12.

21. A food product in which is incorporated a flavour delivery system according to any one of claims 1 to 12.

22. A dentifrice composition or denture adhesive in which is incorporated a flavour delivery system according to any one of claims 1 to 12.

23. A coating for scratch-and-sniff products and aroma packaging products in which is incorporated a flavour delivery system according to any one of claims 1 to 12.

**Claims for the following Contracting State : ES**

1. A process for producing a flavour delivery system offering improved uniformity of flavour release, temperature stability, and taste and aroma masking, and comprising:

(a) a flavour component in an amount of from 5% to 25% by weight of the final delivery system;

(b) a resin component, which resin component comprises a rosin, in an amount of from 10% to 20% by weight of the final delivery system; and

(c) a hydrophobic coating component selected from fats, waxes and mixtures, in an amount of from 45% to 85% by weight of the final delivery system;

wherein the process comprises blending the components to produce the system.

2. A process according to claim 1, wherein the flavour component comprises a flavour oil, preferably spearmint oil, cinnamon oil, oil of wintergreen (methylsalicylate), peppermint oil, lemon oil, orange oil, grape oil, lime oil, grapefruit oil, apple essence, strawberry essence, cherry essence, pineapple essence, banana oil or a mixture thereof.

3. A process according to claim 1 or 2, wherein the flavour component is present in an amount of from 5% to 20% by weight, the resin is present in an amount of from 10% to 20% by weight, and the hydrophobic coating component comprises a fat and is present in an amount of from 50% to 85% by weight, all weights being with respect to the final delivery system.

4. A process according to claim 1 or 2, wherein the flavour component is present in an amount of from 5% to 25% by weight, the resin is present in an amount of from 10% to 20% by weight, and the hydrophobic coating component comprises a wax and is present in an amount of from 45% to 85% by weight, all weights being with respect to the final delivery system.

5. A process according to claim 1, 2, 3 or 4, wherein the resin component is selected from rosins, rosin esters, and mixtures thereof, preferably pentaerythritol ester of partially hydrogenated wood rosin; pentaerythritol ester of wood rosin; glycerol ester of wood rosin; glycerol ester of partially dimerized rosin; glycerol ester of polymerized rosin; glycerol ester of tall oil rosin; glycerol ester of wood rosin and partially hydrogenated wood rosin and partially hydrogenated methyl ester of rosin, such as polymers of alpha-pinene or beta-pinene; terpene resins including polyterpene; or a mixture thereof.

6. A process according to any preceding claim, including an emulsifier.

7. A process according to claim 6, wherein the emulsifier is present in an amount of up to 5% by weight of the final delivery system, preferably in an amount of from 1% to 5% by weight of the final delivery system.

8. A process according to claim 6 or 7, wherein the emulsifier is selected from monoglycerides, diglycerides and triglycerides of fatty acids, polyglycerol esters, and mixtures thereof.

9. A process according to claim 6 or 7, wherein the emulsifier is selected from lecithin, stearates, ester derivatives of stearates, palmitates, ester derivatives of palmitates, oleates, ester derivatives of oleates, glycerides, sucrose polyesters, polyglycerol esters and mixtures thereof.

10. A process according to any preceding claim, further including up to 30% by weight of a sweetener.

11. A process according to claim 10, wherein the sweetener is a natural or artificial high intensity sweetener selected from amino acid-based sweeteners, dipeptide sweeteners, glycyrrhizin, saccharin and its salts, acesulfame salts, cyclamates, steviosides, talin, sucralose, dihydrochalcone compounds and mixtures thereof; preferably sodium saccharin, talin, and acesulfame-K.

12. A process according to any preceding claim, which is in solid particulate form.

13. A process for producing a chewing gum composition offering improved flavour intensity and longevity, which process comprises blending a gum base, a sweetener and a flavour delivery system, the flavour delivery system comprising:
   (a) a flavour component in an amount of from 5% to 25% by weight of the final delivery system;
   (b) a resin component, which resin component comprises a rosin, in an amount of from 10% to 20% by weight of the final delivery system; and
   (c) a hydrophobic coating component selected from fats, waxes and mixtures, in an amount from 45% to 85% by weight of the final delivery system.

14. A process according to claim 13, wherein the gum base comprises an elastomer selected from natural rubber, synthetic rubber and mixtures thereof, preferably chicle, jelutong, balata, gutta-percha, lechi-capsi, sorva, butadiene-styrene copolymers, polyisobutylene, isobutylene-isoprene copolymers, polyethylene, polyvinylacetate, and mixtures thereof.

15. A process according to claim 13 or 14, wherein the gum base is present in an amount of from 5% to 85% by weight of the final chewing gum composition.

16. A process according to claim 13, 14 or 15, which also includes one or more of fillers, colouring agents, flavouring agents, softeners, plasticizers, elastomers, elastomer solvents, sweetening agents and mixtures thereof.

17. A process according to any one of claims 1 to 12, for preparing a flavour delivery system, comprising
   (a) melting the resin component selected from rosins, rosin esters, and mixtures;
   (b) adding the flavour component to the melted resin component under agitation, and stirring the resulting mixture with external heat withdrawn to form a first homogeneous mixture;
   (c) melting the hydrophobic coating component selected from fats, waxes and mixtures thereof;
   (d) adding the mixture of Step (b) to the molten hydrophobic coating component under agitation and continuing to agitate until a second homogeneous mixture is formed; and
   (e) forming particles of the composite of the flavour component, resin component and hydrophobic coating component, by spray congealing.

18. A process for preparing a chewing gum composition having improved sustained flavour intensity and release properties, which comprises:
   (1) preparing a flavour delivery system by the process of claim 17;
   (2) adding the flavour delivery system prepared in Step 1 to a homogeneous mixture of a gum base and remaining chewing gum ingredients; and
   (3) forming the resultant mixture into suitable chewing gum shapes.

19. A process for producing a confectionery composition, which includes incorporating a flavour delivery system produced according to any one of claims 1 to 12.

20. A process for producing a pharmaceutical composition, which includes incorporating a flavour delivery system produced according to any one of claims 1 to 12.

21. A process for producing a food product, which includes incorporating a flavour delivery system produced according to any one of claims 1 to 12.

22. A process for producing dentifrice composition or denture adhesive, which includes incorporating a flavour delivery system produced according to any one of claims 1 to 12.

23. A process for producing coating for scratch-and-sniff products and aroma packaging products, which includes incorporating a flavour delivery system produced according to any one of claims 1 to 12.

## Patentansprüche

## Patentansprüche für folgende Vertragsstaaten : BE, DK, FR, DE, GR, IT, NL, SE, CH, GB

1. Aroma- bzw. Geschmackstoffabgabesystem zur gleichmäßigeren Aromafreisetzung mit verbesserter Temperaturstabilität und verbesserter Geschmacks- und Aromamaskierung, umfassend:
   (a) eine Aromakomponente in einer Menge von 5 - 25 Gew.-% des fertigen Abgabesystems;
   (b) eine ein Kolophonium umfassende Harzkomponente in einer Menge von 10 - 20 Gew.-% des fertigen Abgabesystems und
   (c) eine hydrophobe Überzugkomponente, ausgewählt aus Fetten, Wachsen und Gemischen (derselben) in einer Menge von 45 - 85 Gew.-% des fertigen Abgabesystems.

2. Aromaabgabesystem nach Anspruch 1, wobei die Aromakomponente ein Aromaöl, vorzugsweise Öl der grünen Minze, Wintergrünöl (Methylsalicylat), Pfefferminzöl, Zitronenöl, Orangenöl, Traubenöl, Limettenöl, Grapefruitöl, Apfelessenz, Erdbeeressenz, Kirschessenz, Ananasessenz, Bananenöl oder eine Mischung derselben umfaßt.

3. Aromaabgabesystem nach Anspruch 1 oder 2, wobei die Aromakomponente in einer Menge von 5 - 20 Gew.-%, das Harz in einer Menge von 10 - 20 Gew.-% und die ein Fett umfassende hydrophobe Überzugkomponente in einer Menge von 50 - 85 Gew.-% vorhanden sind, wobei sich sämtliche Gewichtsangaben auf das fertige Abgabesystem beziehen.

4. Aromaabgabesystem nach Anspruch 1 oder 2, wobei die Aromakomponente in einer Menge von 5 - 25 Gew.-%, das Harz in einer Menge von 10 - 20 Gew.-% und die ein Wachs umfassende hydrophobe Überzugkomponente in einer Menge von 45 - 85 Gew.-% vorhanden sind, wobei sich sämtliche Gewichtsangaben auf das fertige Abgabesystem beziehen.

5. Aromaabgabesystem nach Anspruch 1, 2, 3 oder 4, wobei die Harzkomponente aus Kolophoniumsorten, Kolophoniumestern und Mischungen derselben, vorzugsweise dem Pentaerythritester von teilhydriertem Holzkolophonium, dem Pentaerythritester von Holzkolophonium, dem Glycerinester von Holzkolophonium, dem Glycerinester von teilweise dimerisiertem Kolophonium, dem Glycerinester von polymerisiertem Kolophonium, dem Glycerinester von Tallölkolophonium, dem Glycerinester von Holzkolophonium und teilhydriertem Holzkolophonium und teilweise hydriertem Kolophoniummethylester, sowie Polymeren von Alpha-Pinen oder Beta-Pinen, Terpenharzen einschließlich Polyterpen oder einer Mischung hiervon ausgewählt ist.

6. Aromaabgabesystem nach einem der vorhergehenden Ansprüche, enthaltend einen Emulgator.

7. Aromaabgabesystem nach Anspruch 6, wobei der Emulgator in einer Menge von bis zu 5 Gew.-%, vorzugsweise in einer Menge von 1 - 5 Gew.-% des fertigen Abgabesystems vorhanden ist.

8. Aromaabgabesystem nach Anspruch 6 oder 7, wobei der Emulgator aus Monoglyceriden, Diglyceriden und Trigylceriden von Fettsäuren, Polyglycerinestern und Mischungen derselben ausgewählt ist.

9. Aromaabgabesystem nach Anspruch 6 oder 7, wobei der Emulgator aus Lecithin, Stearaten, Esterderivaten von Stearaten, Palmitaten, Esterderivaten von Palmitaten, Oleaten, Esterderivaten von Oleaten, Glyceriden, Saccharosepolyestern, Polyglycerinestern und Mischungen derselben ausgewählt ist.

10. Aromaabgabesystem nach einem der vorhergehenden Ansprüche, zusätzlich enthaltend bis zu 30 Gew.-% eines Süßungsmittels.

11. Aromaabgabesystem nach Anspruch 10, wobei das Süßungsmittel aus einem natürlichen oder künstlichen, hochintensiven Süßungsmittel, ausgewählt aus Süßungsmitteln auf Aminosaurebasis, Dipeptidsüßungsmitteln, Glycyrrhizin, Saccharin und Salzen hiervon, Acesulfamsalzen, Cyclamaten, Steviosiden, Talin, Sucralose, Dihydrochalconverbindungen und Mischungen derselben, vorzugsweise Natriumsaccharin, Talin und Acesulfam-K, besteht.

12. Aromaabgabesystem nach einem der vorhergehenden Ansprüche, das in fester teilchenförmiger Form vorliegt.

13. Kaugummimasse verbesserter Aromaintensität und Langlebigkeit mit einer Gummigrundlage, einem Süßungsmittel und einem Aroma- bzw. Geschmackstoffabgabesystem, wobei das Aroma- bzw. Geschmackstoffabgabesystem
    (a) eine Aromakomponente in einer Menge von 5 - 25 Gew.-% des fertigen Abgabesystems;
    (b) eine ein Kolophonium umfassende Harzkomponente in einer Menge von 10 - 20 Gew.-% des fertigen Abgabesystems und
    (c) eine hydrophobe Überzugkomponente, ausgewählt aus Fetten, Wachsen und Gemischen (derselben) in einer Menge von 45 - 85 Gew.-% des fertigen Abgabesystems
    umfaßt.

14. Kaugummimasse nach Anspruch 13, wobei die Gummigrundlage ein Elastomeres, ausgewählt aus Naturkautschuk, synthetischem Kautschuk und Mischungen hiervon, vorzugsweise Chicle, Jelutong, Balata, Guttapercha, Lechicapsi, Sorva, Butadien/Styrol-Mischpolymeren, Polyisobutylen, Isobutylen/Isopren-Mischpolymeren, Polyethylen, Polyvinylacetat und Mischungen derselben enthält.

15. Kaugummimasse nach Anspruch 13 oder 14, wobei die Gummigrundlage in einer Menge von 5 - 85 Gew.-% der fertigen Kaugummimasse vorhanden ist.

16. Kaugummimasse nach Anspruch 13, 14 oder 15, die zusätzlich eine oder mehrere Komponente(n), nämlich Füllstoffe, Färbemittel, Aromastoffe, weichmachende Mittel, Plastifizierungsmittel, Elastomere, Elastomerenlösungsmittel, Süßungsmittel und Mischungen derselben enthält.

17. Verfahren zur Zubereitung eines Aroma- bzw. Geschmackstoffabgabesystems durch
    (a) Aufschmelzen einer aus Kolophoniumsorten, Kolophoniumestern und Mischungen derselben ausgewählten Harzkomponente;
    (b) Zugabe der Aroma- oder Geschmackstoffkomponente zu der aufgeschmolzenen Harzkomponente unter Rühren und (Weiter-)Rühren des erhaltenen Gemischs unter Ableiten externer Wärme zur Bildung eines ersten homogenen Gemischs;
    (c) Aufschmelzen einer aus Fetten, Wachsen und Mischungen derselben ausgewählten hydrophoben Überzugkomponente;
    (d) Zugabe des Gemischs aus Stufe (b) zu der aufgeschmolzenen hydrophoben Überzugkomponente unter Rühren und Fortsetzen des Rührens bis zur Bildung einer zweiten homogenen Komponente und
    (e) Bildung von Teilchen aus der Masse der Aroma- oder Geschmackstoffkomponente, Harzkomponente und hydrophoben Überzugkomponente durch "Sprühgefrieren",
    wobei die Aroma- oder Geschmackstoffkomponente, Harzkomponente und hydrophobe Überzugkomponente in Mengen, bezogen auf das Gewicht des fertigen Abgabesystems, von 5 - 25% Aroma- bzw. Geschmackstoffkomponente, 10 - 20% Harzkomponente und 45 - 85% hydrophobe Überzugkomponente vorhanden sind.

18. Verfahren zur Zubereitung einer Kaugummimasse länger anhaltender Geschmacksintensität und verbesserter Freigabeeigenschaften durch:
    (1) Zubereiten eines Aroma- bzw. Geschmackstoffabgabesystems nach dem Verfahren gemäß Anspruch 17;
    (2) Zugeben des in Stufe (1) erhaltenen Aroma- bzw. Geschmackstoffabgabesystems zu einem homogenen Gemisch aus Gummigrundlage und den restlichen Kaugummibestandteilen und
(3) Ausformen des erhaltenen Gemischs zu geeigneten Kaugummiformen.

19. Zuckerwerkmasse, in die ein Aroma- bzw. Geschmackstoffabgabesystem nach einem der Ansprüche 1 bis 12 eingearbeitet ist.

20. Arzneimittelzubereitung, in die ein Aroma- bzw. Geschmackstoffabgabesystem nach einem der Ansprüche 1 bis 12 eingearbeitet ist.

21. Nahrungsmittelprodukt, in das ein Aroma- bzw. Geschmackstoffabgabesystem nach einem der Ansprüche 1 bis 12 eingearbeitet ist.

22. Zahnputzmittel oder Zahnersatzhaftmittel, in das ein Aroma- bzw. Geschmackstoffabgabesystem nach einem der Ansprüche 1 bis 12 eingearbeitet ist.

23. Überzug für "Kratz-und-Schnüffel-Produkte" und Aromaverpackungsprodukte, in dem ein Aroma- bzw. Geschmackstoffabgabesystem nach einem der Ansprüche 1 bis 12 untergebracht ist.

**Patentansprüche für folgenden Vertragsstaat : ES**

1. Verfahren zur Herstellung eines Aroma- bzw. Geschmackstoffabgabesystems zur gleichmäßigeren Aromafreisetzung mit verbesserter Temperaturstabilität und verbesserter Geschmacks- und Aromamaskierung, umfassend:
   (a) eine Aromakomponente in einer Menge von 5 - 25 Gew.-% des fertigen Abgabesystems;
   (b) eine ein Kolophonium umfassende Harzkomponente in einer Menge von 10 - 20 Gew.-% des fertigen Abgabesystems und
   (c) eine hydrophobe Überzugkomponente, ausgewählt aus Fetten, Wachsen und Gemischen (derselben) in einer Menge von 45 - 85 Gew.-% des fertigen Abgabesystems,
   durch Vermischen der (einzelnen) Komponenten zur Ausbildung des Systems.

2. Verfahren nach Anspruch 1, wobei die Aromakomponente ein Aromaöl, vorzugsweise Öl der grünen Minze, Wintergrünöl (Methylsalicylat), Pfefferminzöl, Zitronenöl, Orangenöl, Traubenöl, Limettenöl, Grapefruitöl, Apfelessenz, Erdbeeressenz, Kirschessenz, Ananasessenz, Bananenöl oder eine Mischung derselben umfaßt.

3. Verfahren nach Anspruch 1 oder 2, wobei die Aromakomponente in einer Menge von 5 - 20 Gew.-%, das Harz in einer Menge von 10 - 20 Gew.-% und die ein Fett umfassende hydrophobe Überzugkomponente in einer Menge von 50 - 85 Gew.-% vorhanden sind, wobei sich sämtliche Gewichtsangaben auf das fertige Abgabesystem beziehen.

4. Verfahren nach Anspruch 1 oder 2, wobei die Aromakomponente in einer Menge von 5 - 25 Gew.-%, das Harz in einer Menge von 10 - 20 Gew.-% und die ein Wachs umfassende hydrophobe Überzugkomponente in einer Menge von 45 - 85 Gew.-% vorhanden sind, wobei sich sämtliche Gewichtsangaben auf das fertige Abgabesystem beziehen.

5. Verfahren nach Anspruch 1, 2, 3 oder 4, wobei die Harzkomponente aus Kolophoniumsorten, Kolophoniumestern und Mischungen derselben, vorzugsweise dem Pentaerythritester von teilhydriertem Holzkolophonium, dem Pentaerythritester von Holzkolophonium, dem Glycerinester von Holzkolophonium, dem Glycerinester von teilweise dimerisiertem Kolophonium, dem Glycerinester von polymerisiertem Kolophonium, dem Glycerinester von Tallölkolophonium, dem Glycerinester von Holzkolophonium und teilhydriertem Holzkolophonium und teilweise hydriertem Kolophoniummethylester, sowie Polymeren von Alpha-Pinen oder Beta-Pinen, Terpenharzen einschließlich Polyterpen oder einer Mischung hiervon ausgewählt ist.

6. Verfahren nach einem der vorhergehenden Ansprüche, wobei ein Emulgator mitverwendet wird.

7. Verfahren nach Anspruch 6, wobei der Emulgator in einer Menge von bis zu 5 Gew.-%, vorzugsweise in einer Menge von 1 - 5 Gew.-% des fertigen Abgabesystems vorhanden ist.

8. Verfahren nach Anspruch 6 oder 7, wobei der Emulgator aus Monoglyceriden, Diglyceriden und Triglyceriden von Fettsäuren, Polyglycerinestern und Mischungen derselben ausgewählt ist.

9. Verfahren nach Anspruch 6 oder 7, wobei der Emulgator aus Lecithin, Stearaten, Esterderivaten von Stearaten, Palmitaten, Esterderivaten von Palmitaten, Oleaten, Esterderivaten von Oleaten, Glyceriden, Saccharosepolyestern, Polyglycerinestern und Mischungen derselben ausgewählt ist.

10. Verfahren nach einem der vorhergehenden Ansprüche, wobei zusätzlich bis zu 30 Gew.-% eines Süßungsmittels mitverwendet werden.

11. Verfahren nach Anspruch 10, wobei das Süßungsmittel aus einem natürlichen oder künstlichen, hochintensiven Süßungsmittel, ausgewählt aus Süßungsmitteln auf Aminosäurebasis, Dipeptidsüßungsmitteln, Glycyrrhizin, Saccharin und dess Salzen, Acesulfamsalzen, Cyclamaten, Steviosiden, Talin, Sucralose, Dihydrochalconverbindungen und Mischungen derselben, vorzugsweise Natriumsaccharin, Talin und Acesulfam-K, besteht.

12. Verfahren nach einem der vorhergehenden Ansprüche, wobei das Aroma- bzw. Geschmackstoffabgabesystem in fester teilchenförmiger Form vorliegt.

13. Verfahren zur Herstellung einer Kaugummimasse verbesserter Aromaintensität und Langlebigkeit durch Vermischen einer Gummigrundlage, eines Süßungsmittels und eines Aroma- bzw. Geschmackstoffabgabesystems, wobei letzteres
   (a) eine Aromakomponente in einer Menge von 5 - 25 Gew.-% des fertigen Abgabesystems;
   (b) eine ein Kolophonium umfassende Harzkomponente in einer Menge von 10 - 20 Gew.-% des fertigen Abgabesystems und
   (c) eine hydrophobe Überzugkomponente, ausgewählt aus Fetten, Wachsen und Gemischen (derselben) in einer Menge von 15 - 85 Gew.-% des fertigen Abgabesystems
   umfaßt.

14. Verfahren nach Anspruch 13, wobei die Gummigrundlage ein Elastomeres, ausgewählt aus Naturkautschuk, synthetischem Kautschuk und Mischungen hiervon, vorzugsweise Chicle, Jelutong, Balata, Guttapercha, Lechi-capsi, Sorva, Butadien/Styrol-Mischpolymeren, Polyisobutylen, Isobutylen/Isopren-Mischpolymeren, Polyethylen, Polyvinylacetat und Mischungen derselben enthält.

15. Verfahren nach Anspruch 13 oder 14, wobei die Gummigrundlage in einer Menge von 5 - 85 Gew.-% der fertigen Kaugummimasse vorhanden ist.

16. Verfahren nach Anspruch 13, 14 oder 15, wobei eine oder mehrere Komponente(n), nämlich Füllstoffe, Färbemittel, Aromastoffe, weichmachende Mittel, Plastifizierungsmittel, Elastomere, Elastomerenlösungsmittel, Süßungsmittel und Mischungen derselben mitverwendet wird (werden).

17. Verfahren nach einem der Ansprüche 1 bis 12 zur Zubereitung eines Aroma- bzw. Geschmackstoffabgabesystems durch
   (a) Aufschmelzen einer aus Kolophoniumsorten, Kolophoniumestern und Mischungen derselben ausgewählten Harzkomponente;
   (b) Zugabe der Aroma- oder Geschmackstoffkomponente zu der aufgeschmolzenen Harzkomponente unter Rühren und (Weiter-)Rühren des erhaltenen Gemischs unter Ableiten externer Wärme zur Bildung eines ersten homogenen Gemischs;
   (c) Aufschmelzen einer aus Fetten, Wachsen und Mischungen derselben ausgewählten hydrophoben Überzugkomponente;
   (d) Zugabe des Gemischs aus Stufe (b) zu der aufgeschmolzenen hydrophoben Überzugkomponente unter Rühren und Fortsetzen des Rührens bis zur Bildung einer zweiten homogenen Komponente und
   (e) Bildung von Teilchen aus der Masse der Aroma- oder Geschmackstoffkomponente, Harzkomponente und hydrophoben Überzugkomponente durch "Sprühgefrieren".

18. Verfahren zur Zubereitung einer Kaugummimasse länger anhaltender Geschmacksintensität und verbesserter Freigabeeigenschaften durch:
   (1) Zubereiten eines Aroma- bzw. Geschmackstoffabgabesystems nach dem Verfahren gemäß Anspruch 17;
   (2) Zugeben des in Stufe (1) erhaltenen Aroma- bzw. Geschmackstoffabgabesystems zu einem homogenen Gemisch aus Gummigrundlage und den restlichen Kaugummibestandteilen und

(3) Ausformen des erhaltenen Gemischs zu geeigneten Kaugummiformen.

**19.** Verfahren zur Herstellung einer Zuckerwerkmasse, welches das Einarbeiten eines nach einem der Ansprüche 1 bis 12 hergestellten Aroma- bzw. Geschmackstoffabgabesystems einschließt.

**20.** Verfahren zur Herstellung einer Arzneimittelzubereitung, in welches ein Aroma- bzw. Geschmackstoffabgabesystem nach einem der Ansprüche 1 bis 12 eingearbeitet ist.

**21.** Verfahren zur Herstellung eines Nahrungsmittelprodukts, in welches ein Aroma- bzw. Geschmackstoffabgabesystem nach einem der Ansprüche 1 bis 12 eingearbeitet ist.

**22.** Verfahren zur Herstellung eines Zahnputzmittels oder Zahnersatzhaftmittels, in welches ein Aroma- bzw. Geschmackstoffabgabesystem nach einem der Ansprüche 1 bis 12 eingearbeitet ist.

**23.** Verfahren zur Herstellung eines Überzugs für "Kratz-und-Schnüffel-Produkte" und Aromaverpackungsprodukte, in welchem ein Aroma- bzw. Geschmackstoffabgabesystem nach einem der Ansprüche 1 bis 12 untergebracht ist.

**Revendications**

**Revendications pour les Etats contractants suivants : BE, DK, FR, DE, GR, IT, NL, SE, CH, GB**

**1.** Un système de libération d'arômes offrant une amélioration de l'uniformité de la libération de l'arôme, de la stabilité à la température, et du masquage du goût et de l'arôme, et comprenant:

(a) un arôme en une quantité de 5 à 25% en poids par rapport au poids final du système de libération d'arômes;

(b) une résine comprenant une colophane, en une quantité de 10 à 20% en poids par rapport au poids final du système de libération; et

(c) un revêtement hydrophobe choisi parmi les matières grasses, les cires et leurs mélanges en une quantité de 45 à 85% en poids par rapport au poids final du système de libération.

**2.** Un système de libération d'arômes selon la revendication 1, caractérisé en ce que l'arôme comprend une essence aromatisée, de préférence essence de menthe verte, essence de cannelle, essence de wintergreen (méthylsalicylate), essence de menthe poivrée, essence de citron, essence d'orange, essence de raisin, essence de lime, essence de pamplemousse, essence de pomme, essence de fraise, essence de cerise, essence d'ananas, essence de banane ou leurs mélanges.

**3.** Un système de libération d'arômes selon la revendication 1 ou 2, caractérisé en ce que l'arôme est présent en une quantité de 5 à 20% en poids, la résine est présente en une quantité de 10 à 20% en poids, et le revêtement hydrophobe comprend une matière grasse et il est présent en une quantité de 50 à 85% en poids, tous les poids étant exprimés par rapport au poids final du système de libération d'arômes.

**4.** Un système de libération d'arômes selon la revendication 1 ou 2, caractérisé en ce que l'arôme est présent en une quantité de 5 à 25% en poids, la résine est présente en une quantité de 10 à 20% en poids, et le revêtement hydrophobe comprend une cire et il est présent en une quantité de 45 à 85% en poids, tous les poids étant donnés par rapport au poids final du système de libération d'arômes.

**5.** Un système de libération d'arômes selon la revendication 1, 2, 3 ou 4, caractérisé en ce que la résine est choisie parmi les colophanes, esters de colophanes, et leurs melanges, de préférence: pentaérythritol ester de calophane de bois partiellement hydrogénée; pentaérythritolester de colophane de bois; glycérolester de colophane de bois; glycérolester de colophane partiellement dimérisée; glycérolester de colophane polymérisé; glycérolester de colophane d'huile de pin; glycérolester de colophane de bois et de colophane de bois partiellement hydrogénée et ester méthylique de colophane partiellement hydrogénée, tels que polymères d'alpha-pinène ou de béta-pinène; résines terpéniques, incluant le polyterpène; ou leurs mélanges.

**6.** Un système de libération d'arômes selon l'une quelconque des revendications précédentes, caractérisé en ce qu'il comprend un émulsifiant.

7.  Un système de libération d'arômes selon la revendication 6, caractérisé en ce que l'émulsifiant est présent en une quantité atteignant jusqu'à 5% en poids par rapport au poids final du système de libération, de préférence de 1 à 5% en poids par rapport au poids final du système de libération.

8.  Un système de libération d'arômes selon la revendication 6 ou 7, caractérisé en ce que l'émulsifiant est choisi parmi: momoglycérides, diglycérides et triglycérides d'acides gras, polyglycérol esters et leurs mélanges.

9.  Un système de libération d'arômes selon la revendication 6 ou 7, caractérisé en ce que l'émulsifiant est choisi parmi: lécithine, stéarates, dérivés ester des stéarates, palmitates, dérivés ester des palmitates, oléates, dérivés ester d'oléates, glycérides, polyesters saccharose, polyglycérol esters et leurs mélanges.

10. Un système de libération d'arômes selon l'une quelconque des revendications précédentes, caractérisé en ce qu'il comprend en outre 30% en poids d'un édulcorant.

11. Un système de libération d'arômes selon la revendication 10, caractérisé en ce que l'édulcorant est un édulcorant de haute intensité, naturel ou artificiel, choisi parmi: édulcorants à base d'acides aminés, édulcorants à base de dipeptides, glycyrrhizine, saccharine et ses sels, sels d'acésulfame, cyclamates, stéviosides, talin, sucralose, dérivés de dihydrochalcone et leurs mélanges; de préférence, acésulfame-K, talin et saccharine sodique.

12. Un système de libération d'arômes selon l'une quelconque des revendications précédentes, caractérisé en ce qu'il se présente sous forme de particules solides.

13. Une composition de gomme à mâcher offrant une amélioration de l'intensité et de la longévité de l'arôme, comprenant une base de gomme, un édulcorant et un système de libération d'arômes, caractérisé en ce que le système de libération d'arômes comprend:
    (a) un arôme en une quantité de 5 à 25% en poids par rapport au poids final du système de libération;
    (b) une résine comprenant une colophane en quantité de 10 à 20% en poids par rapport au poids final du système de libération; et
    (c) un revêtement hydrophobe choisi parmi les matières grasses, les cires et leurs mélanges en une quantité de 45 à 85% en poids par rapport au poids final du système de libération.

14. Une composition de gomme à mâcher selon la revendication 13, caractérisée en ce que la base de gomme comprend un élastomère choisi parmi: caoutchouc naturel, caoutchouc synthétique et leurs mélanges, de préférence chicle, jelutong, balata, gutta-percha, lechi-capsi, sorva, copolymères butadiène-styrène, polyisobutyléne, copolymères isobutylène-isoprène, polyéthylène, polyvinylacétate, et leurs mélanges.

15. Une composition de gomme à mâcher selon la revendication 13 ou 14, caractérisée en ce que la base de gomme est présente en une quantité de 5 à 85% en poids par rapport au poids final de la composition de gomme à mâcher.

16. Une composition de gomme à mâcher selon la revendication 13, 14 ou 15, caractérisée en ce qu'elle comprend aussi un ou plusieurs composants sélectionnés parmi: charges, agents colorants, agents de sapidité, agents ramollissants, plastifiants, élastomères, solvants d'élastomères, agents édulcorants et leurs mélanges.

17. Un procédé de préparation d'un système de libération d'arômes, comprenant les étapes suivantes:
    (a) on fait fondre une résine choisie parmi les colophanes, esters de colophanes et leurs mélanges;
    (b) on ajoute un arôme à la résine fondue sous agitation et l'on agite le mélange obtenu avec prélèvement externe de chaleur pour former un premier mélange homogène;
    (c) on fait fondre le revêtement hydrophobe choisi parmi les matières grasses, les cires et leurs mélanges;
    (d) on ajoute le mélange de l'étape (b) au revêtement hydrophobe fondu sous agitation et l'on poursuit l'agitation jusqu'à ce qu'il se forme un second mélange homogène; et
    (e) on forme des particules du composite constitué de l'arôme, de la résine et du revêtement hydrophobe, par congélation par pulvérisation;

caractérisé en ce que l'arôme, la résine et le revêtement hydrophobe sont présents en quantités de 5 à 25% pour l'arôme, de 10 à 20% pour la résine et de 45 à 85% pour le revêtement hydrophobe.

**18.** Un procédé de préparation d'une composition de gomme à mâcher présentant des propriétés d'intensité et de libération prolongée de l'arôme améliorées qui comprend les étapes suivantes:

(1) on prépare un système de libération d'arômes par le procédé selon la revendication 17;

(2) on ajoute le système de libération d'arômes préparé dans l'étape 1 à un mélange homogène constitué d'une base de gomme et des ingrédients restants de la gomme à mâcher; et

(3) on donne au mélange ainsi obtenu des formes convenables de gomme à mâcher.

**19.** Une composition de confiserie dans laquelle est incorporé un système de libération d'arômes selon l'une quelconque des revendications 1 à 12.

**20.** Une composition pharmaceutique dans laquelle est incorporé un système de libération d'arômes selon l'une quelconque des revendications 1 à 12.

**21.** Un produit alimentaire dans lequel est incorporé un système de libération d'arômes selon l'une quelconque des revendications 1 à 12.

**22.** Une composition de dentifrice ou un ciment dentaire dans lesquels est incorporé un système de libération d'arômes selon l'une quelconque des revendications 1 à 12.

**23.** Un revêtement pour les produits dégageant une odeur après grattage et les produits d'emballage d'arômes dans lesquels est incorporé un système de libération d'arômes selon l'une quelconque des revendications 1 à 12.

## Revendications pour l'Etat contractant suivant : ES

**1.** Un procédé de préparation d'un système de libération d'arômes offrant une amélioration de l'uniformité de la libération de l'arôme, de la stabilité à la température, et du masquage du goût et de l'arôme, et comprenant:

(a) un arôme en une quantité de 5 à 25% en poids pas rapport au poids final du système de libération d'arômes;

(b) une résine comprenant une colophane, en une quantité de 10 à 20% en poids par rapport au poids final du système de libération; et

(c) un revêtement hydrophobe choisi parmi les matières grasses, les cires et leurs mélanges en une quantité de 45 à 85% en poids par rapport au poids final du système de libération; caractérisé en ce que le procédé comprend le mélange des composants pour préparer le système;

caractérisé en ce que le procédé comprend le mélange des composants pour préparer le système.

**2.** Un procédé selon la revendication 1, caractérisé en ce que l'arôme comprend une essence aromatisée, de préférence: essence de menthe verte, essence de cannelle, essence de wintergreen (méthylsalicylate), essence de menthe poivrée, essence de citron, essence d'orange, essence de raisin, essence de lime, essence de pamplemousse, essence de pomme, essence de fraise, essence de cerise, essence d'ananas, essence de banane ou leurs mélanges.

**3.** Un procédé selon la revendication 1 ou 2, caractérisé en ce que l'arôme est présent en une quantité de 5 à 20% en poids, la résine est présente en une quantité de 10 à 20% en poids, et le revêtement hydrophobe comprend une matière grasse et il est présent en une quantité de 50 à 85% en poids, tous les poids étant exprimés par rapport au poids final du système de libération.

**4.** Un procédé selon la revendication 1 ou 2, caractérisé en ce que l'arôme est présent en une quantité de 5 à 25% en poids, la résine est présente en une quantité de 10 à 20% en poids, et le revêtement hydrophobe comprend une cire et il est présent en une quantité de 45 à 85% en poids, tous les poids étant donnés par rapport au poids final du système de libération.

**5.** Un procédé selon la revendication 1, 2, 3 ou 4, caractérisé en ce que la résine est choisie parmi les colophanes, esters de colophanes, et leurs mélanges, de préférence: pentaérythritol ester de colophane de bois partiellement hydrogénée; pentaérythritolester de colophane de bois; glycérolester de colophane de bois; glycérolester de colophane partiellement dimérisée; glycérolester de colophane polymérisée; glycérolester de colophane d'huile de pin; glycérolester de colophane de bois et de colophane de bois partiellement hydrogénée et ester méthylique de colophane partiellement hydrogénée, tels que polymères d'alpha-pinène ou de béta-pinène; résines terpéniques, incluant le polyterpène; ou leurs mélanges.

6.   Un procédé selon l'une quelconque des revendications précédentes, caractérisé en ce qu'il comprend un émulsifiant.

7.   Un procédé selon la revendication 6, caractérisé en ce que l'émulsifiant est présent en une quantité atteignant jusqu'à 5% en poids par rapport au poids final du système de libération, de préférence de 1 à 5% en poids par rapport au poids final du système de libération.

8.   Un procédé selon la revendication 6 ou 7, caractérisé en ce que l'émulsifiant est choisi parmi: momoglycérides, diglycérides et triglycérides d'acides gras, polyglycérol esters et leurs mélanges.

9.   Un procédé selon la revendication 6 ou 7, caractérisé en ce que l'émulsifiant est choisi parmi: lécithine, stéarates, dérivés ester des stéarates, palmitates, dérivés esters des palmitates, oléates, dérivés ester d'oléates, glycérides, polyesters saccharose, polyglycérol esters et leurs mélanges.

10.  Un procédé selon l'une quelconque des revendications précédentes, caractérisé en ce qu'il comprend en outre 30% en poids d'un édulcorant.

11.  Un procédé selon la revendication 10, caractérisé en ce que l'édulcorant est un édulcorant de haute intensité, naturel ou artificiel, choisi parmi: édulcorants à base d'acides aminés, édulcorants à base de dipeptides, glycyrrhyizine, saccharine et ses sels, sels d'acésulfame, cyclamates, stéviosides, talin, sucralose, dérivés de dihydrochalcone et leurs mélanges; de préférence, acésulfame-K, talin et saccharine sodique.

12.  Un procédé selon l'une quelconque des revendications précédentes, caractérisé en ce qu'il conduit à des particules solides.

13.  Un procédé de préparation d'une composition de gomme à mâcher offrant une amélioration de l'intensité et de la longévité de l'arôme, qui comprend le mélange d'une base de gomme, d'un édulcorant et d'un système de libération, le système de libération d'arômes comprenant:
     (a) un arôme en une quantité de 5 à 25% en poids par rapport au poids final du système de libération;
     (b) une résine comprenant une colophane, en quantité de 10 à 20% en poids par rapport au poids final du système de libération; et
     (c) un revêtement hydrophobe choisi parmi les matières grasses, les cires et leurs mélanges, en une quantité de 45 à 85% en poids par rapport au poids final du système de libération.

14.  Un procédé selon la revendication 13, caractérisée en ce que la base de gomme comprend un élastomère choisi parmi: caoutchouc naturel, caoutchouc synthétique et leurs mélanges, de préférence chicle, jelutong, balata, gutta-percha, lechi-capsi, sorva, copolymères butadiène-styrène, polyisobutylène, copolymères isobutylène-isoprène, polyéthylène, polyvinylacétate, et leurs mélanges.

15.  Un procédé selon la revendication 13 ou 14, caractérisée en ce que la base de gomme est présente en une quantité de 5 à 85% en poids par rapport au poids final de la composition de gomme à mâcher.

16.  Un procédé selon l'une quelconque des revendications 13, 14 ou 15, caractérisée en ce qu'il comprend aussi un ou plusieurs composants sélectionnés parmi: charges, agents colorants, agents de sapidité, agents ramollissants, plastifiants, élastomères, solvants d'élastomères, agents édulcorants et leurs mélanges.

17.  Un procédé de préparation d'un système de libération d'arômes selon l'une quelconque des revendications 1 à 12, comprenant les étapes suivantes:
     (a) on fait fondre une résine choisie parmi les colophanes, esters de colophanes et leurs mélanges;
     (b) on ajoute un arôme à la résine fondue sous agitation et l'on agite le mélange obtenu avec prélèvement externe de chaleur pour former un premier mélange homogène;
     (c) on fait fondre le revêtement hydrophobe choisi parmi les matières grasses, les cires et leurs mélanges;

(d) on ajoute le mélange de l'étape (b) au revêtement hydrophobe fondu sous agitation et l'on poursuit l'agitation jusqu'à ce qu'il se forme un second mélange homogène; et

(e) on forme des particules du composite constitué de l'arôme, de la résine et du revêtement hydrophobe, par congélation par pulvérisation.

18. Un procédé de préparation d'une composition de gomme à mâcher présentant des propriétés d'intensité et de libération prolongée de l'arôme améliorées qui comprend les étapes suivantes:

(1) on prépare un système de libération d'arômes par le procédé selon la revendication 17;

(2) on ajoute le système de libération d'arômes préparé dans l'étape 1 à un mélange homogène constitué d'une base de gomme et des ingrédients restants de la gomme à mâcher; et

(3) on donne au mélange ainsi obtenu des formes convenables de gomme à mâcher.

19. Un procédé de préparation d'une composition de confiserie qui comprend l'incorporation d'un système de libération d'arômes préparé selon l'une quelconque des revendications 1 à 12.

20. Un procédé de préparation d'une composition pharmaceutique qui comprend l'incorporation d'un système de libération d'arômes préparé selon l'une quelconque des revendications 1 à 12.

21. Un procédé de préparation d'un produit alimentaire qui comprend l'incorporation d'un système de libération d'arômes préparé selon l'une quelconque des revendications 1 à 12.

22. Un procédé de préparation d'une composition de dentifrice ou d'un ciment dentaire qui comprend l'incorporation d'un système de libération d'arômes selon l'une quelconque des revendications 1 à 12.

23. Un procédé de préparation d'un revêtement pour les produits dégageant une odeur après grattage et les produits d'emballage d'arômes qui comprend l'incorporation d'un système de libération d'arômes selon l'une quelconque des revendications 1 à 12.

# ANHYDROUS GUMS WITH FLAV/RESIN/WAX ENCAP
## % FLAVOR PERCEPTION

CINNAMON FLAVOR